# EUROPÄISCHE PATENTSCHRIFT

(11) **EP 1 369 322 B1**
(45) Veröffentlichungstag und Bekanntmachung des Hinweises auf die Patenterteilung: **28.02.2007**
(21) Anmeldenummer: 03007953.7
(22) Anmeldetag: 09.04.2003
(51) Int. Cl.: B60R 25/00

(54) **Verfahren und Vorrichtung zur Datenübertragung in einem Kraftfahrzeug**
Method and device for data transfer in a vehicle
Procédé et dispositif pour la transmission de données dans un véhicule

(30) Priorität: 29.05.2002 DE 10224017
(43) Veröffentlichungstag der Anmeldung: 10.12.2003
(73) Patentinhaber: Volkswagen Aktiengesellschaft, 38436 Wolfsburg (DE)
(72) Erfinder: Bartels, Arne, 38108 Braunschweig (DE)
(74) Vertreter: Banzer, Hans-Jörg

(56) Entgegenhaltungen:
- EP-A- 0 642 959
- WO-A-02/08022
- DE-A- 19 644 565
- DE-A- 19 960 959
- US-B1- 6 351 828

## Beschreibung

Die vorliegende Erfindung betrifft ein Verfahren sowie ein Steuergerät zum Betreiben eines Datenübertragungsnetzes in einem Kraftfahrzeug, bzw. ein entsprechend eingerichtetes Kraftfahrzeug.

Innerhalb eines Kraftfahrzeugs sind verteilt zahlreiche Komponenten angeordnet, die untereinander in Datenverbindung stehen. Die Daten werden dabei mit Hilfe eines Datenübertragungsnetzes, wie insbesondere einem CAN-Bus, ausgetauscht. Dabei muss jedoch dafür Sorge getragen werden, dass das Datenübertragungsnetz nicht von außen zugänglich ist, da in einem solchen Fall unbefugte Personen durch Zugreifen auf das Datenübertragungsnetz unerlaubte Funktionen des Kraftfahrzeugs auslösen könnten. Insbesondere besteht die Gefahr, dass von unbefugten Personen ein externes Steuergerät an das Datenübertragungsnetz angeschlossen, die Wegfahrsperre manipuliert bzw. deaktiviert und/oder die Zentralverriegelung geöffnet und das Kraftfahrzeug unerlaubterweise in Betrieb genommen und entwendet wird. Aus diesem Grund war es bislang nicht möglich, an von außen leicht zugänglichen Stellen des Kraftfahrzeugs Komponenten anzuordnen, die eine Verbindung zu dem Datenübertragungsnetz benötigen.

Aus der DE 199 60 959 A1 ist eine Vorrichtung zum manipulationssicheren Datenaustausch in einem Kraftfahrzeug bekannt. Ein Gateway steuert den Datenaustausch zwischen einem ersten Bussystem und einem zweiten Bussystem, wobei an dem ersten Bussystem beispielsweise ein Alarmanlagensteuergerät angeschlossen sein kann. Um eine Manipulation von mit dem ersten Bussystem verbundenen Komponenten zu verhindern, wird vorgeschlagen, dass das Gatewayüberprüfungsmittel zum Überprüfen der zur Datenübertragung zwischen den beiden Bussystemen übertragenen Daten aufweist. Abhängig von der Überprüfung wird das Durchleiten der Daten zwischen den beiden Bussystemen gesteuert. Die Überprüfung erfolgt beispielsweise durch in den übertragenen Daten vorgesehene Identifiern.

Aus der US 6,351,828 B1 ist eine Sicherheitsvorrichtung für Diagnoseterminals in einem Computernetzwerk eines Kraftfahrzeugs beschrieben. Das Diagnoseterminal dient der Verbindung von mit dem Netzwerk verbundenen Komponenten mit einem externen Diagnosegerät. Für das Netzwerk wird vorzugsweise ein CAN-Protokoll verwendet und bei den mit dem Netzwerk verbundenen Komponenten kann es sich beispielsweise um ein Getriebemodul, ein Zündsystemmodul, ein Treibstoffsystemmodul oder ein Bremssystemmodul handeln. Zwischen dem Diagnoseterminal und dem Netzwerk ist ein Relais vorgesehen, welches von einer Auswertungsschaltung gesteuert wird. Die Auswertungsschaltung steuert das Relais abhängig von Eingangssignalen, welche von dem Diagnoseterminal empfangen werden. In dem Fall, dass bei ausgeschalteter Zündung auch alle mit dem Netzwerk verbundenen Komponenten deaktiviert sind, ist vorgesehen, dass auch die Auswertungsschaltung deaktiviert und das Relais geöffnet ist, so dass das Diagnoseterminal von dem Netzwerk getrennt ist. Bei durchgängig mit der Stromversorgung verbundenen Komponenten wird hingegen vorgeschlagen, dass das Relais durch Verwendung eines speziellen Deaktivierungsbefehls deaktiviert wird. Der Deaktivierungsbefehl kann durch die Module an dem Netzwerk oder durch das externe Diagnosegerät veranlasst werden.

Der vorliegenden Erfindung liegt daher die Aufgabe zu Grunde, ein Verfahren bzw. ein Steuergerät zum Betreiben eines Datenübertragungsnetzes in einem Kraftfahrzeug sowie ein entsprechend eingerichtetes Kraftfahrzeug zu schaffen, mit denen es möglich ist, das Datenübertragungsnetz an beliebige Stellen des Kraftfahrzeugs zu führen, ohne ein unbefugtes Einwirken auf das Datenübertragungsnetz befürchten zu müssen.

Erfindungsgemäß wird diese Aufgabe durch ein Verfahren mit den Merkmalen des Anspruchs 1 bzw. ein Steuergerät mit den Merkmalen des Anspruchs 9 sowie ein Kraftfahrzeug mit den Merkmalen des Anspruchs 10 gelöst. Die Unteransprüche definieren jeweils vorteilhafte und bevorzugte Ausführungsformen der vorliegenden Erfindung.

Erfindungsgemäß wird eine Datenübertragung zwischen einem Abtrennteil des Datenübertragungsnetzes und dem übrigen Datenübertragungsnetz verhindert, wenn wenigstens die Zündung des Kraftfahrzeugs ausgeschaltet wird. Dies bedeutet, dass der Abtrennteil vom übrigen Datenübertragungsnetz abgetrennt bzw. abgeteilt ist, so dass auch bei Zugriff auf den Abtrennteil nicht in unzulässiger Weise auf Komponenten eingewirkt werden kann, die mit dem übrigen Teil des Datenübertragungsnetzes verbunden sind.

Die Datenübertragung zwischen dem Abtrennteil und dem übrigen Teil des Datenübertragungsnetzes kann auf verschiedene Weise verhindert werden. Zum einen können Verbindungsleitungen zwischen dem Abtrennteil und dem übrigen Teil wenigstens zum Teil vollständig unterbrochen werden. Beispielsweise können ggf. vorhandene Stromversorgungsleitungen ununterbrochen bleiben und nur Leitungen zur Übertragung von Datensignalen unterbrochen werden. Selbstverständlich können aber auch alle Leitungen einschließlich von ggf. vorhandenen Stromversorgungsleitungen unterbrochen werden, um auch einen unbefugten Zugriff auf die Stromversorgung des Kraftfahrzeugs zu verhindern. Die Unterbrechung kann dabei galvanisch sein, so dass der Abtrennteil vollständig getrennt wird. Daneben ist es auch möglich, zur Datenübertragung zwischen dem Abtrennteil und dem übrigen Teil des Datenübertragungsnetzes Treiber einzusetzen, die aktiviert und inaktiviert werden können. Zum Abtrennen des Abtrennteils genügt in einem solchen Fall die Inaktivierung der Treiber, um eine Datenübertragung zu verhindern.

Die Datenübertragung zwischen dem Abtrennteil und dem übrigen Teil des Datenübertragungsnetzes wird erfindungsgemäß dann verhindert, wenn die Zündung des Kraftfahrzeugs ausgeschaltet wird. Damit ist sichergestellt, dass im alltäglichen Betrieb des Kraftfahrzeugs bei Außerbetriebnahme der Abtrennteil sicher abgetrennt wird. Im Fahrbetrieb, d.h. bei eingeschalteter Zündung, muss der Abtrennteil selbstverständlich mit dem übrigen Datenübertragungsnetz verbunden sein.

Der Abtrennteil dient insbesondere zur Ankopplung von Komponenten an das Datenübertragungsnetz, die nahe einer Außenfläche des Kraftfahrzeugs angeordnet sind, bzw. sich an exponierter bzw. leicht zugänglicher Stelle des Kraftfahrzeugs befinden. Beispielsweise können dies Sensoren zur Überwachung des toten Winkels des Kraftfahrzeugs sein, die in einem Außenspiegel, im Stoßfänger, im Kühlergrill oder im Kofferraumdeckel angeordnet sind. Weiterhin können dies auch allgemeine Sensoren, wie Radarsensoren, Videosensoren oder Lasersensoren sein, die beispielsweise in einem Außenspiegel, im Stoßfänger, im Kühlergrill oder im Kofferraumdeckel montiert sein können.

Vorteilhafterweise wird die Datenübertragung zwischen dem Abtrennteil und dem übrigen Teil des Datenübertragungsnetzes auch bei Detektion eines Unfalls verhindert. Auf diese Weise kann verhindert werden, dass bei einer Beschädigung von Komponenten, die über den Abtrennteil mit dem Datenübertragungsnetz verbunden sind, das Datenübertragungsnetz durch Kurzschlüsse und/oder fehlerhafte Signale gestört wird.

Das Datenübertragungsnetz ist insbesondere ein CAN-Bus, kann aber auch jede beliebige andere Ausgestaltung aufweisen.

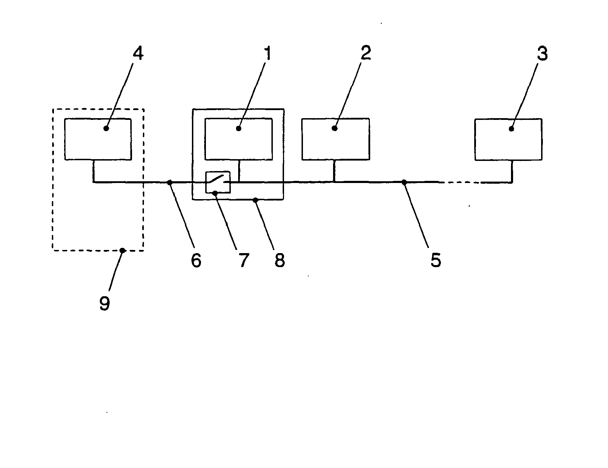

Die Erfindung wird nachfolgend anhand eines bevorzugten Ausführungsbeispiels unter Bezugnahme auf die beigefügte Zeichnung näher erläutert.

Die einzige Figur zeigt den schematischen Aufbau eines Datenübertragungsnetzes in einem Kraftfahrzeug mit angeschlossenen Komponenten.

Die einzige Figur zeigt schematisch ein Blockdiagramm verschiedener Komponenten an einem Kraftfahrzeug, die mittels eines Datenübertragungsnetzes 5, 6 miteinander verbunden sind. Das Datenübertragungsnetz 5, 6 ist dabei in einen Hauptteil 5 und einen Abtrennteil 6 aufgeteilt, die über einen Unterbrecher 7 miteinander verbindbar bzw. voneinander trennbar sind. Das Datenübertragungsnetz 5, 6 ist ein CAN-Netz, über das störungssicher Daten ausgetauscht werden können. An dem CAN-Netz 5, 6 sind verschiedene CAN-Steuergeräte 1-4 angeschlossen, die verschiedene Komponenten an das Datenübertragungsnetz 5, 6 anbinden und für einen Datenaustausch zwischen den Komponenten sorgen. Die CAN-Steuergeräte 1-4 dienen als Schnittstelle zwischen einer Komponente und dem Datenübertragungsnetz 5, 6.

Das CAN-Steuergerät 1 ist dabei Bestandteil eines Netzsteuergeräts 8, das zusätzlich den Unterbrecher 7 aufweist und zur Steuerung des gesamten Datenübertragungsnetzes 5, 6 eingerichtet ist. Insbesondere ist das Netzsteuergerät 8 derart eingerichtet, dass es den Unterbrecher 7 öffnet, sobald die Zündung des Kraftfahrzeugs ausgeschaltet wird, und auf diese Weise den Abtrennteil 6 vom übrigen Teil 5 trennt. An den CAN-Steuergeräten 2 und 3 können beispielsweise das Motorsteuergerät, die Zentralverriegelung, verschiedenste Sensoren oder andere Komponenten angeschlossen sein, wobei sämtliche an dem Hauptteil 5 des Datenübertragungsnetzes 5, 6 angeschlossene Komponenten derart im Kraftfahrzeug angeordnet sind, dass sie nicht von außen von unbefugten Personen durch einfachen Wegbau weniger Teile erreichbar sind.

An dem Abtrennteil 6 des Datenübertragungsnetzes 5, 6 ist ein Sensor 9 zur Überwachung eines toten Winkels des Kraftfahrzeugs angeschlossen. Dieser Sensor 9 ist in einem Stoßfänger des Kraftfahrzeugs angeordnet, wobei er auch im Außenspiegel, im Kühlergrill oder im Kofferraumdeckel angeordnet werden kann. Der Sensor 9 zur Überwachung des toten Winkels weist das CAN-Steuergerät 4 auf, um Daten über das Datenübertragungsnetz 5, 6 austauschen zu können. Auf Grund seiner Lage besteht beim Sensor 9 zur Überwachung des toten Winkels die Gefahr, dass unbefugte Personen durch Wegbau von Teilen des Außenspiegels Zugriff zum CAN-Steuergerät 4 bzw. zum Abtrennteil 6 erlangen und Daten in den Abtrennteil 6 einspeisen können.

Dies wird jedoch dadurch verhindert, dass beim Ausschalten der Zündung des Kraftfahrzeugs der Unterbrecher 7 geöffnet wird und so eine Datenübertragung zwischen dem Abtrennteil 6 und dem Hauptteil 5 verhindert wird. Somit ist es bei ausgeschalteter Zündung auch bei Zugriff auf den Abtrennteil 6 nicht möglich, Daten auf dem Hauptteil 5 einzuspeisen bzw. auszulesen und so unzulässigerweise Funktionen des Kraftfahrzeugs auszulösen.

Durch die erfindungsgemäße Lösung, bei der Teile des Datenübertragungsnetzes im Kraftfahrzeug abgetrennt werden können, ist die Anordnung von Sensoren, die einen Anschluss an das Datenübertragungsnetz benötigen, auch an exponierten Stellen des Kraftfahrzeugs möglich.

### BEZUGSZEICHENLISTE

- 1-4: CAN-Steuergeräte
- 5: Hauptteil des CAN-Netzes
- 6: Abtrennteil des CAN-Netzes
- 7: Unterbrecher
- 8: Netzsteuergerät
- 9: Sensor zur Überwachung des toten Winkels

## Patentansprüche

1. Verfahren zum Betreiben eines Datenübertragungsnetzes (5, 6) in einem Kraftfahrzeug, wobei das Datenübertragungsnetz (5, 6) Komponenten des Kraftfahrzeugs miteinander verbindet und einen Hauptteil (5) und einen Abtrennteil aufweist, bei welchem Verfahren eine Datenübertragung zwischen dem Abtrennteil (6) und dem Hauptteil (5) des Datenübertragungsnetzes (5, 6) verhindert wird wenn die Zündung des Kraftfahrzeugs ausgeschaltet ist, **dadurch gekennzeichnet, dass** die mit dem Hauptteil verbundenen Komponenten wenigstens eine Zentralverriegelung umfassen und dass der Abtrennteil einen an einer exponierten Stelle des Kraftfahrzeugs angeordneten Sensor mit dem Hauptteil (5) des Datenübertragungsnetzes (5, 6) verbindet.

2. Verfahren nach Anspruch 1, **dadurch gekennzeichnet, dass** der Abtrennteil (6) des Datenübertragungsnetzes (5, 6) nahe einer Außenfläche des Kraftfahrzeugs angeordnet ist.

3. Verfahren nach Anspruch 2, **dadurch gekennzeichnet, dass** der Abtrennteil (6) des Datenübertragungsnetzes (5, 6) wenigstens zum Teil in einem Außenspiegel, einem Stoßfänger, einem Kühlergrill und/oder einer Kofferraumklappe des Kraftfahrzeugs angeordnet ist.

4. Verfahren nach einem der vorhergehenden Ansprüche, **dadurch gekennzeichnet, dass** der Abtrennteil (6) eine Vorrichtung zur Erkennung eines toten Winkels (9) mit dem übrigen Datenübertragungsnetz (5) verbindet.

5. Verfahren nach einem der vorhergehenden Ansprüche, **dadurch gekennzeichnet, dass** die Datenübertragung zwischen dem Abtrennteil (6) und dem Hauptteil (5) des Datenübertragungsnetzes (5, 6) verhindert wird, sobald ein Unfall des Kraftfahrzeugs detektiert wird.

6. Verfahren nach einem der vorhergehenden Ansprüche, **dadurch gekennzeichnet, dass** die Datenübertragung zwischen dem Abtrennteil (6) und dem Hauptteil (5) des Datenübertragungsnetzes (5, 6) durch Unterbrechung wenigstens eines Teils von Übertragungsleitungen des Datenübertragungsnetzes (5, 6) verhindert wird.

7. Verfahren nach einem der vorhergehenden Ansprüche, **dadurch gekennzeichnet, dass** die Datenübertragung zwischen dem Abtrennteil (6) und dem Hauptteil (5) des Datenübertragungsnetzes (5, 6) durch Inaktivieren wenigstens eines Teils von Treibern zur Weiterleitung von Signalen auf dem Datenübertragungsnetz (5, 6) verhindert wird.

8. Verfahren nach einem der vorhergehenden Ansprüche, **dadurch gekennzeichnet, dass** das Datenübertragungsnetz (5, 6) ein CAN-Netz ist.

9. Steuergerät (8) zum Steuern eines Datenübertragungsnetzes (5, 6) in einem Kraftfahrzeug, **dadurch gekennzeichnet, dass** das Steuergerät (8) zur Durchführung eines Verfahrens nach einem der Ansprüche 1 bis 8 eingerichtet ist.

10. Kraftfahrzeug mit einem Datenübertragungsnetz (5, 6), **dadurch gekennzeichnet, dass** das Kraftfahrzeug zur Durchführung eines Verfahrens nach einem der Ansprüche 1 bis 8 eingerichtet ist.

11. Kraftfahrzeug nach Anspruch 10, **dadurch gekennzeichnet, dass** das Kraftfahrzeug ein Steuergerät (8) nach Anspruch 9 aufweist.

12. Kraftfahrzeug nach Anspruch 10 oder 11, **dadurch gekennzeichnet, dass** das Kraftfahrzeug einen Sensor zur Überwachung des toten Winkels des Kraftfahrzeugs (9) und/oder einen Abstandssensor aufweist, der mittels des Abtrennteils (6) mit dem Hauptteil (5) des Datenübertragungsnetzes (5, 6) verbunden ist.

## Claims

1. Method for operating a data transmission network (5, 6) in a motor vehicle, the data transmission network (5, 6) connecting components of the motor vehicle to one another and having a main part (5) and a separate part, in which method data transmission between the separate part (6) and the main part (5) of the data transmission network (5, 6) is prevented if the ignition of the motor vehicle is switched off, **characterized in that** the components which are connected to the main part comprise at least one central locking system, and **in that** the separate part connected a sensor, which is arranged at an exposed location on the motor vehicle, to the main part (5) of the data transmission network (5, 6).

2. Method according to Claim 1, **characterized in that** the separate part (6) of the data transmission network (5, 6) is arranged near to an external surface of the motor vehicle.

3. Method according to Claim 2, **characterized in that** the separate part (6) of the data transmission network (5, 6) is arranged at least partially in an external mirror, a bumper, radiator grille and/or a boot lid of the motor vehicle.

4. Method according to one of the preceding claims, **characterized in that** the separate part (6) connects a device for detecting a dead angle (9) to the rest of the data transmission network (5).

5. Method according to one of the preceding claims, **characterized in that** the data transmission between the separate part (6) and the main part (5) of the data transmission network (5, 6) is prevented as soon as an accident of the motor vehicle is detected.

6. Method according to one of the preceding claims, **characterized in that** the data transmission between the separate part (6) and the main part (5) of the data transmission network (5, 6) is prevented by interrupting at least some of the transmission lines of the data transmission network (5, 6).

7. Method according to one of the preceding claims, **characterized in that** the data transmission between the separate part (6) and the main part (5) of the data transmission network (5, 6) is prevented by deactivating at least some drivers for passing on signals on the data transmission network (5, 6).

8. Method according to one of the preceding claims, **characterized in that** the data transmission network (5, 6) is a CAN network.

9. Control device (8) for controlling a data transmission network (5, 6) in a motor vehicle, **characterized in that** the control device (8) is designed to carry out a method according to one of Claims 1 to 8.

10. Motor vehicle having a data transmission network (5, 6), **characterized in that** the motor vehicle is designed to carry out a method according to one of Claims 1 to 8.

11. Motor vehicle according to Claim 10, **characterized in that** the motor vehicle has a control device (8) according to Claim 9.

12. Motor vehicle according to Claim 10 or 11, **characterized in that** the motor vehicle has a sensor for monitoring the dead angle of the motor vehicle (9) and/or a distance sensor which is connected to the main part (5) of the data transmission network (5, 6) by means of the separate part (6).

## Revendications

1. Procédé pour exploiter un réseau (5, 6) de transmission de données dans un véhicule automobile, sachant que le réseau (5, 6) de transmission de données relie entre eux des composants du véhicule automobile et présente une partie principale (5) et une partie de coupure, procédé selon lequel une transmission de données entre la partie de coupure (6) et la partie principale (5) du réseau (5, 6) de transmission de données est empêchée si l'allumage du véhicule automobile est désactivé, **caractérisé en ce que** les composants reliés à la partie principale comprennent au moins un verrouillage centralisé, et **en ce que** la partie de coupure relie à la partie principale (5) du réseau (5, 6) de transmission de données un détecteur disposé en un endroit exposé du véhicule automobile.

2. Procédé selon la revendication 1, **caractérisé en ce que** la partie de coupure (6) du réseau (5, 6) de transmission de données est disposée à proximité d'une surface extérieure du véhicule automobile.

3. Procédé selon la revendication 2, **caractérisé en ce que** la partie de coupure (6) du réseau (5, 6) de transmission de données est disposée au moins pour partie dans un rétroviseur extérieur, un pare-chocs, une calandre et/ou un couvercle de coffre à bagages du véhicule automobile.

4. Procédé selon l'une quelconque des revendications précédentes, **caractérisé en ce que** la partie de coupure (6) relie au reste (5) du réseau de transmission de données un dispositif (9) pour détecter un angle mort.

5. Procédé selon l'une quelconque des revendications précédentes, **caractérisé en ce que** la transmission de données entre la partie de coupure (6) et la partie principale (5) du réseau (5, 6) de transmission de données est empêchée dès qu'un accident du véhicule automobile est détecté.

6. Procédé selon l'une quelconque des revendications précédentes, **caractérisé en ce que** la transmission de données entre la partie de coupure (6) et la partie principale (5) du réseau (5, 6) de transmission de données est empêchée en coupant au moins une partie des lignes de transmission du réseau (5, 6) de transmission de données.

7. Procédé selon l'une quelconque des revendications précédentes, **caractérisé en ce que** la transmission de données entre la partie de coupure (6) et la partie principale (5) du réseau (5, 6) de transmission de données est empêchée en rendant inactifs au moins une partie des excitateurs destinés à transmettre des signaux sur le réseau (5, 6) de transmission de données.

8. Procédé selon l'une quelconque des revendications précédentes, **caractérisé en ce que** le réseau (5, 6) de transmission de données est un réseau CAN.

9. Appareil de commande (8) pour commander un réseau (5, 6) de transmission de données dans un véhicule automobile, **caractérisé en ce que** l'appareil de commande (8) est conçu pour la mise en oeuvre d'un procédé selon l'une quelconque des revendications 1 à 8.

10. Véhicule automobile pourvu d'un réseau (5, 6) de transmission de données, **caractérisé en ce que** le véhicule automobile est conçu pour la mise en oeuvre d'un procédé selon l'une quelconque des revendications 1 à 8.

11. Véhicule automobile selon la revendication 10, **caractérisé en ce que** le véhicule automobile présente un appareil de commande (8) selon la revendication 9.

12. Véhicule automobile selon la revendication 10 ou 11, **caractérisé en ce que** le véhicule automobile présente un détecteur (9) pour surveiller l'angle mort du véhicule automobile et/ou un détecteur de distance, qui est relié au moyen de la partie de coupure (6) à la partie principale (5) du réseau (5, 6) de transmission de données.
